Europäisches Patentamt

European Patent Office

Office européen des brevets

(11) Publication number: **0 455 924 A1**

## (12) EUROPEAN PATENT APPLICATION

(21) Application number: **90610079.7**

(51) Int. Cl.⁵: **F16J 9/06, F16J 15/16**

(22) Date of filing: **21.12.90**

The title of the invention has been amended (Guidelines for Examination in the EPO, A-III, 7.3).

(30) Priority: **29.12.89 DK 6752/89**

(43) Date of publication of application:
**13.11.91 Bulletin 91/46**

(84) Designated Contracting States:
**AT BE CH DE DK ES FR GB GR IT LI LU NL SE**

(71) Applicant: **W.S. Shamban Europa A/S**
**No. 17, Fabriksvej**
**DK-3000 Helsingor (DK)**

(72) Inventor: **Christiansen, Bendt**
**Odinsvej 63**
**DK-3000 Helsingor (DK)**
Inventor: **Hansen, Finn Rud**
**Lindestien 2**
**DK-3000 Helsingor (DK)**

(74) Representative: **Vingtoft, Knud Erik et al**
**Plougmann & Vingtoft Sankt Annae Plads 11**
**P.O. Box 3007**
**DK-1021 Copenhagen K (DK)**

(54) Captive sealing arrangement between relatively moving surfaces.

(57) A sealing arrangement comprises a sealing structure especially for sealing a gap (10) between a lower part (11) and an upper part (12) moveable in relation to the lower part (11), the upper part defining an opening (51) which passes at least part of the sealing structure during relative movement of the upper and lower parts. The sealing structure comprises a sealing ring (13) having a generally U-shaped cross-section and being mounted in a channel or groove (14), which is defined in the lower surface part (11). The channel (14) has a bottom surface part and a pair of opposite upper side surface parts extending in converging relationship in a direction opposite to the bottom surface part, so as to define a constricted aperture of the channel. The sealing structure further comprises a first biasing or preloading member (23) being in abutting engagement with the bottom surface part (15) of the channel and with the adjacent bottom surface (24) of the sealing ring for biasing or preloading the sealing ring in a direction out of the channel, whereby sealing lips (30, 31) of the sealing ring are pressed into tight engagement with the adjacent upper part (12), a second biasing or preloading member (38) mounted within the sealing ring (13) for biasing or preloading side parts or sealing members thereof away from each other in opposite directions and toward the respective sloping side surface parts (27, 28) of the channel (14).

EP 0 455 924 A1

**Fig. 1**

# A SEALING ARRANGEMENT

The present invention relates to a sealing arrangement comprising a sealing structure especially for sealing between relatively-movable, adjacent first and second surface parts of said arrangement, said second surface part defining an opening which passes at least part of the sealing structure during relative movement of the surface parts.

Sealing arrangements of the above kind have a wide field of applications within industry, for example for forming sealed engagements in valves.

Normally, sealing structures for forming sealed engagements in valves comprise a relatively broad solid sealing ring which is mounted in a channel or groove defined by two parts with an aperture therebetween which is more narrow than the broadest part of the sealing ring when the two parts are put together after the mounting of the sealing ring. The manufacture of such divided parts for defining the groove is relatively costly and the mounting is time-consuming. Another disadvantage of the prior art sealing arrangements is that when used under high pressure conditions the risk of parts of the sealing material being blown off the sealing ring during opening of the valve is very high.

It is an object of the present invention to provide a sealing arrangement which overcomes the drawbacks of the prior art and which may advantageously be used under high pressures.

According to the invention the sealing structure of the above sealing arrangement comprises;

a sealing ring mounted in a channel or groove defined in the first surface part, said channel having a bottom surface part and a pair of opposite upper side surface parts extending in converging relationship in a direction opposite to the bottom surface part, so as to define a constricted aperture of the channel, and said sealing ring having a generally U-shaped cross section and comprising a bottom part and two side parts which form two sealing members;

a first biasing or preloading means being in abutting engagement with the bottom surface part of the channel and with a bottom surface of the bottom part of the sealing ring for biasing or preloading said sealing ring in a direction out of the channel, whereby sealing lips forming the free ends of said sealing members are pressed into tight engagement with the opposite second surface part; and

a second biasing or preloading means mounted between the two sealing members of the sealing ring for biasing or preloading said two sealing members away from each other in opposite directions and toward the respective sloping side surface parts of the channel.

These features provide a sealing structure wherein the sealing ring is biased or preloaded both in a direction out of the channel or groove and in a direction generally transverse to the channel so as to obtain a high initial sealing force.

In the preferred embodiment of the sealing structure according to the invention the channel further comprises two sloping lower side surface parts, the slope of which is directed opposite to the slope of the respective upper side surface parts, and each sealing member of the sealing ring has upper and lower outer surface parts being generally complementary to adjacent side surfaces of the channel.

In this way it is possible to obtain a very good guidance of the sealing ring in the channel, so as to minimize the risk of the sealing ring tilting and getting stuck in the channel.

Advantageously, under normal working conditions, the maximum width of the sealing structure exceeds the width of the constricted aperture of the channel, so as to retain the sealing ring in the channel during the passage of the opening in the second surface part.

Thus the second biasing or preloading means has two functions. It generates — together with the first biasing or preloading means — an initial sealing pressure between the respective upper outer surface parts of the sealing ring and the upper side surface parts of the channel, and it secures the sealing ring in the channel.

For further decreasing the risk of the sealing ring being pushed out of the channel it is advantageous that the second biasing or preloading means is less resilient than the first biasing or preloading means.

In the preferred embodiment of the sealing arrangement according to the invention throughbores are formed in the bottom part of the sealing ring and the first and second biasing or preloading means are fluid permeable, so as to provide a fluid communication between the bottom part of the channel and the opening in the second surface part when passing the sealing structure.

These features will diminish the risk of the sealing ring being blown out of the channel if a high pressure is prevailing in the bottom part of the channel.

Preferably, each of the first and second biasing or preloading means is made of a helically wound corrosion resistant metal spring. A spring means of this kind is able to resist high pressures and high temperatures without deterioration. Furthermore, the sealing ring is preferably made of a PTFE-based material having a high temperature and high chemical resistance combined with good sealing properties and a low coefficient of friction.

According to the invention the sealing arrangement provides a throttling action during opening of the valve. This advantageous feature is achieved as the resilience of the ring and the second biasing or preloading means enables a high pressure fluid flow to force its way through a passage formed between the nearest sealing member and the adjacent side surfaces of the channel from a gap between the adjacent first and second surface parts of the sealing arrangement to the bottom of the channel. The throttling action is further enhanced due to the passage of the fluid flow through the first biasing or preloading means, the bores in the bottom part of the sealing member, and the second biasing or preloading means.

The invention will now be described in detail by way of an example and referring to the drawings, in which

Fig. 1 is a sectional view of a sealing arrangement according to the invention;

Figs. 2-5 are sectional views of the sealing arrangement of Fig. 1 showing different steps of an opening operation,

Fig. 3A is an enlarged view of Fig. 3 illustrating the fluid flow when the opening is performed,

Figs. 6-9 are sectional views of the sealing arrangement of Fig. 1 showing different steps of a closing operation.

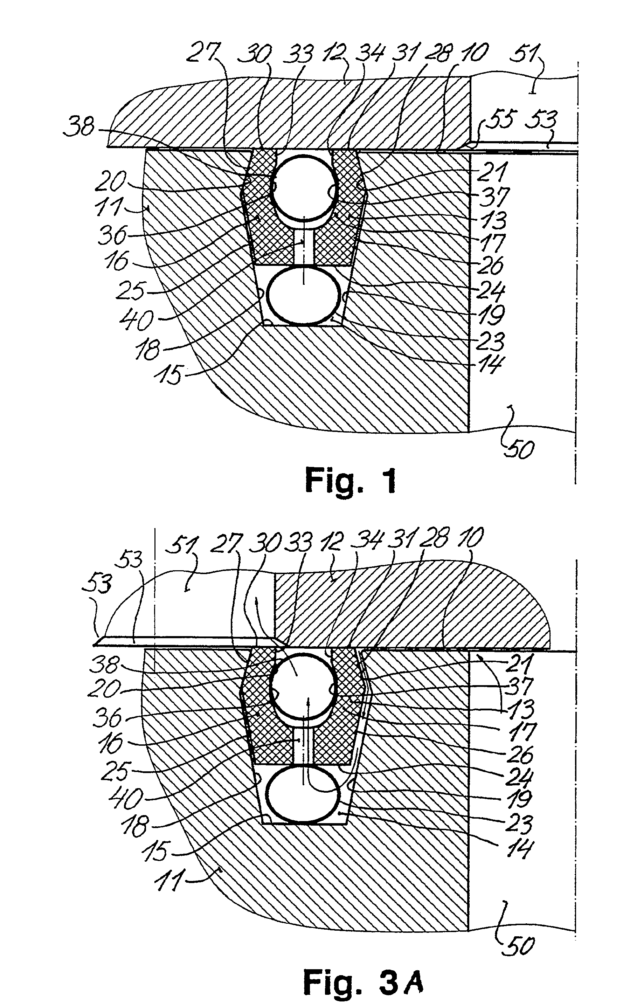

In Fig. 1 a sealing arrangement comprising a sealing structure is shown in a position of rest, i.e. in a position where no fluid pressure acts on the structure.

The sealing structure is provided for generating a sealing effect in a gap 10 between a lower metal part 11 and an upper metal part 12. The metal parts 11 and 12 can for example be valve elements, which are movable in relation to each other.

The sealing is to be effected by a sealing ring 13, which has a generally U-shaped cross section, and which is preferably made of a PTFE-based material. The ring 13 is positioned in an annular channel or groove 14 formed in the lower metal part 11. The channel 14 has a bottom surface 15 and two opposite lower side surfaces 18 and 19, respectively, which incline and diverge outwardly as seen from the bottom, and two opposite, inwardly inclining upper side surfaces 20 and 21, respectively. The channel 14 further receives a lower biasing or preloading ring 23, which is preferably a helically wound corrosion resistant metal spring being in abutting engagement with the bottom surface 15 of the channel and a lower surface 24 of the sealing ring 13. The sealing ring 13 comprises two sealing members 16 and 17 with two opposite, outwardly inclining lower side surfaces 25 and 26, respectively, and two opposite, inwardly inclining upper side surfaces 27 and 28, respectively, said surfaces 25, 26, 27 and 28 being positioned adjacent to the respective side surfaces of the channel 18, 19, 20 and 21 and having generally the same inclination or slope. A pair of substantially plane upper surfaces of the sealing ring 13 are formed by a pair of spaced sealing lips 30 and 31 being in sealing engagement with the upper metal part 12. The generally U-shaped sealing ring 13 has an inner surface which is formed by two upper, inner side surface parts 33 and 34, and two side surface parts 36 and 37 having a cross-sectional shape defining circular arcs with a common centre. An upper annular biasing or preloading ring 38 which is preferably also a helically wound corrosion resistant metal spring is received in the space defined between the opposite arc-shaped surface parts 36 and 37.

The lower biasing or preloading ring 23 applies an upwardly directed force to the bottom surface 24 of the sealing ring 13, so that the upper sealing lips 30 and 31 are forced sealingly towards the upper metal part 12. Furthermore, the upper biasing or preloading ring 38 applies horizontally outwardly directed forces to the side surface parts 36 and 37 of the sealing ring 13 so as to provide a sealing effect between the upper side surface parts 20 and 21 of the channel 14 and the upper side surface parts 27 and 28 of the sealing ring 13.

Through-bores 40 extending between the outer bottom surface 24 and the inner bottom surface of the sealing ring 13 are formed in the ring so as to permit fluid to pass therethrough.

Because the cross-sectional shape of the sealing ring 13 and of the sealing structure as such is symmetrical, a sealing effect can be obtained for movement in opposite directions.

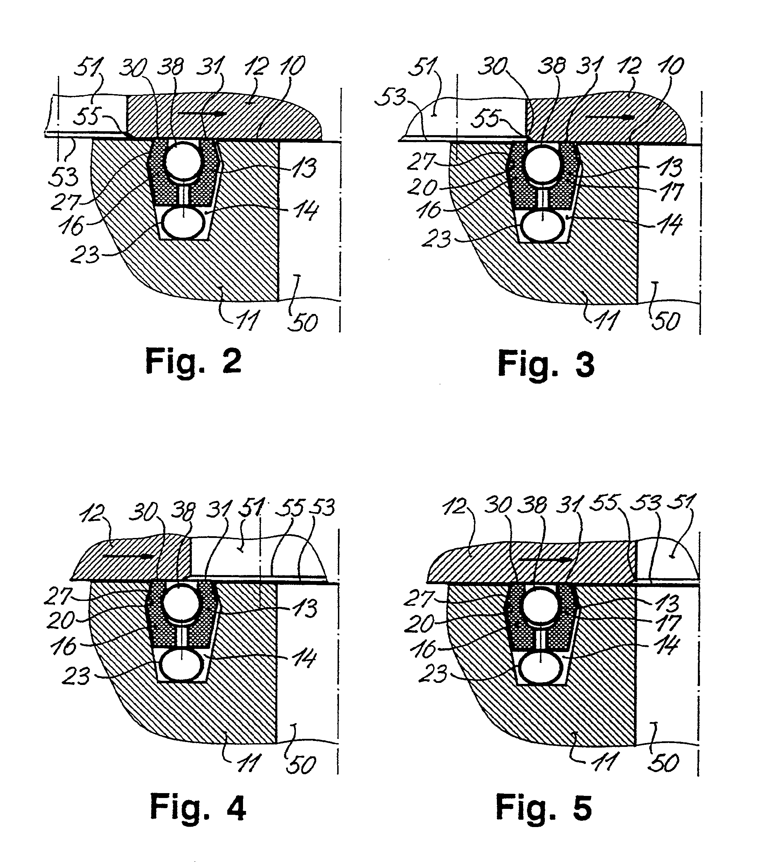

Figs. 2-5 show a sealing structure as that illustrated in Fig. 1 used in a valve being moved from a closed to an open position so as to bring an inlet duct 50, which is under a high pressure, into fluid communication with an outlet duct 51. The outlet duct 51 is formed in the upper metal part 12 which can be moved substantially horizontally in relation to the generally stationary lower metal part 11. The outlet duct 51 has a lower inlet opening 53 defined by a chamfered edge portion 55 which serves to reduce the risk of damaging the sealing lips 30 and 31 when the edge portion 55 is passing.

Fig. 2 shows the initial step of the opening of the valve. The sealing of the gap 10 is solely performed by the upper left surface part 27 and by the sealing lip 30 of the sealing ring 13. In this position the sealing effect is partly generated by pressure activation of the left sealing member 16 of the sealing ring 13. This means that the forced sealing engagement between the upper left surface part 27 of the ring and the adjacent upper side surface part 20 of the channel 14 and between the left sealing lip 30 and the bottom surface of the upper metal part 12, respectively, is generated by the fluid pressure acting on the inner surface parts 33 and 36 and the bottom surface 24 of the sealing ring 13. However, the sealing engagement of the sealing lip 30 is initially generated by the force of the lower biasing or preloading ring 23, and this force is reduced by the action of the upper biasing or preloading ring 38, so that an appropriate sealing force is established between the sealing lip 30 and the adjacent surface part of the upper metal part 12.

Figs. 3 and Fig. 3A illustrate the actual opening step of the valve. In these figures the initial communication between the pressurized inlet duct 50 and the outlet duct 51 has just been established. Fluid flows from the inlet duct 50 through the gap 10 and thereby forces the right hand sealing member 17 of the sealing ring 13 toward the left so as to open a passage 54 between the respective surface parts 26 and 28 of the sealing ring 13 and the respective surface parts 19 and 21 of the channel 14 so that fluid can flow to the bottom of the channel 14, through openings in the lower biasing or preloading ring 23, through the bores 40 in the sealing ring 13, through the openings in the upper biasing or preloading ring 38, and into the outlet duct 51 through an opening 56 defined between the inner part of the left hand sealing member 16 and the peripheral edge 55 of the opening 53 of the outlet duct 51 as indicated by arrows in Fig. 3A. Obviously, a very high degree of throttling action may be obtained, so that the rate of the fluid flowing out of the sealing ring 13 is relatively low so as to reduce the risk of material being torn off from the sealing lip 30 of the sealing ring 13.

The throttling action can easily be adjusted to a preferred value by varying the height and the length of the gap 10 by choosing an upper biasing or preloading ring 38 having a different resilience, or by varying the size and/or members of the through-bores 40 in the sealing ring 13 or the size of the openings in the biasing or preloading rings 23 and 38.

When the upper metal part 12 is moved from the position shown in Fig. 3 to the position shown in Fig. 4, part of the sealing structure is passed by the chamfered edge portion 55 of the outlet duct 51. During this movement the sealing ring 13 is retained in the channel 14 by the action of the upper biasing or preloading ring 38.

In Fig. 5 the opening of the valve has been completed, and fluid may flow unrestricted from the inlet duct 50 to the outlet duct 51 aligned therewith. In this position the sealing structure prevents any fluid escape to the environment.

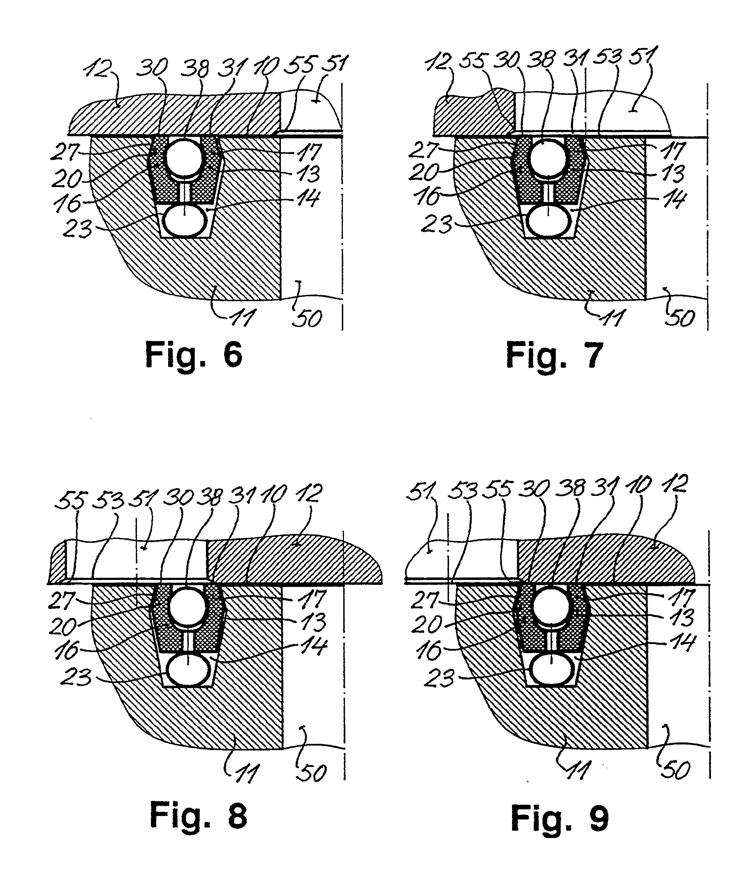

Figs. 6-9 illustrate various steps when the valve is moved from an open to a closed position. The upper part 12 of the sealing arrangement is gradually moved towards the left as indicated by arrows. In Fig. 7, part of the chamfered edge 55 passes the sealing ring 13, which is retained in the channel 14 by the action of the upper biasing or preloading ring 38. In Fig. 8 the fluid flow changes its path as the right hand sealing member 17 is gradually pushed towards the left, and the fluid flows between the left side surface parts 19, 21 and 26, 28, respectively, of the channel 14 and the sealing member 17. In Fig. 9 a sealing effect is established by means of the left hand sealing member 16 and the fluid communication between the pressurized duct 50 of the lower part 11 of the arrangement and the outlet duct 51 of the upper part 12 of the arrangement is cut off.

When the sealing structure according to the invention is to be mounted in the channel 14 the lower biasing or preloading ring 23 is first placed in the bottom of the channel 14. Thereafter, the sealing ring 13 is pushed down into the channel 14 and placed on top of the lower biasing or preloading ring 23 and the upper biasing or preloading ring 38 is positioned between the sealing members 16 and 17 and is forced down between and into engagement with the surface parts 36 and 37, while elastically deforming the biasing or preloading rings 23 and 38. When the upper biasing or preloading ring has been mounted in the channel 14, it will retain the sealing structure in place in the channel 14.

The sealing arrangement shown in the drawings may be subject to various modifications. The lower biasing or preloading ring may, for example, be formed as an integrated part of the sealing ring. Furthermore, the fluid communication between the bottom of the channel and the duct of the upper surface part can be established by means of inclined through-bores in the bottom part of the sealing ring and grooves in the inner surface parts of the sealing ring, whereby solid biasing or preloading rings may be used.

## Claims

1. A sealing arrangement comprising a sealing structure especially for sealing between relatively-movable, adjacent first and second surface parts of said arrangement, said second surface part defining an opening which passes at least part of the sealing structure during relative movement of the surface parts, said sealing structure comprising:

   a sealing ring mounted in a channel or groove defined in the first surface part, said channel having a bottom surface part and a pair of opposite upper side surface parts extending in converging relationship in a direction opposite to the bottom surface part, so as to define a constricted aperture of the channel, and said sealing ring having a generally U-shaped cross section and comprising a bottom part and two side parts which form two sealing members,

   a first biasing or preloading means being in abutting engagement with the bottom surface part of the channel and with a bottom surface of the bottom part of the sealing ring for biasing or preloading said sealing ring in a direction out of the channel, whereby sealing lips forming the free ends of said sealing members are pressed into tight engagement with the opposite second surface part, and a second biasing or preloading means mounted between the two sealing members of the sealing ring for biasing or preloading said two sealing members away from each other in opposite directions and toward the respective sloping side surface parts of the channel.

2. A sealing arrangement according to claim 1, wherein the channel further comprises two sloping lower side surface parts, the slope of which is directed opposite to the slope of the respective upper side surface parts.

3. A sealing arrangement according to claim 1 or 2, wherein each sealing member of the sealing ring has upper and lower outer surface parts being generally complementary to adjacent side surfaces of the channel.

4. A sealing arrangement according to any of claims 1-3, wherein, under normal working conditions, the maximum width of the sealing structure exceeds the width of the constricted aperture of the channel, so as to retain the sealing ring in the channel during the passage of the opening in the second surface part.

5. A sealing arrangement according to any of claims 1-4, wherein the second biasing or preloading means is less resilient than the first biasing or preloading means.

6. A sealing arrangement according to any of claims 1-5, wherein through-bores are formed in the bottom part of the sealing ring and the first and second biasing or preloading means are fluid permeable, so as to provide a fluid communication between the bottom part of the channel and the opening in the second surface part when passing the sealing structure.

7. A sealing arrangement according to any of claims 1-6, wherein each of the first and second biasing or preloading means is a helically wound metal spring.

8. A sealing arrangement according to any of claims 1-7, wherein the sealing ring is made of a PTFE-based material.

9. A sealing structure as defined in any of claims 1-8.

10. A valve means comprising a sealing arrangement according to any of claims 1-8, wherein the sealing arrangement provides a throttling action during opening of the valve.

Fig. 1

Fig. 3 A

**Fig. 2**

**Fig. 3**

**Fig. 4**

**Fig. 5**

Fig. 6

Fig. 7

Fig. 8

Fig. 9

EP 0 455 924 A1

## European Patent Office
## EUROPEAN SEARCH REPORT

Application number

EP 90610079.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | SE-B- 429373 (W S SHAMBAN EUROPA A/S) | 1 | F 16 J 9/06; 15/16 |
| | --- | | |
| A | DE-A1-2 855 438 (LINDE AG) | 1 | |
| | --- | | |
| A | US-A- 3 653 670 (SIFRI ET AL) | 1 | |
| | --- | | |
| A | US-A- 4 714 259 (MACK ET AL) | 1 | |
| | --- | | |
| | ------- | | |

TECHNICAL FIELDS
SEARCHED (Int. Cl.4)

F 16 J

The present search report has been drawn up for all claims

| Place of search | Date of completion of the search | Examiner |
|---|---|---|
| STOCKHOLM | 25-03-1991 | PHALÉN H. |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO Form 1503 03 82

10